# EUROPÄISCHE PATENTSCHRIFT

(11) **EP 3 548 360 B1**
(45) Veröffentlichungstag und Bekanntmachung des Hinweises auf die Patenterteilung: **02.06.2021**
(21) Anmeldenummer: 17805214.8
(22) Anmeldetag: 30.11.2017
(51) Int. Cl.: B62D 1/04, B62D 1/06, B62D 1/08

(54) **LENKRAD, BEDIENEINHEIT FÜR EIN SOLCHES LENKRAD SOWIE LENKRADBAUGRUPPE UND VERFAHREN ZU DEREN HERSTELLUNG**
STEERING WHEEL FOR A VEHICLE
VOLANT POUR VOITURE

(30) Priorität: 30.11.2016 DE 102016123134
(43) Veröffentlichungstag der Anmeldung: 09.10.2019
(73) Patentinhaber: Dalphi Metal España, S.A., 36213 Vigo (ES); PSA Automobiles SA, 78300 Poissy (FR)
(72) Erfinder: BAÑA CASTRO, Ramon, 36208 Vigo (ES); PEREIRO COTO, Pedro, 36400 O Porrino (ES); SEGOVIA ROMERO, Miguel, 36450 Salvaterra de Mino (ES); SANTORIO CANCELAS, Alberto, 36124 Vigo (ES); CARBALLIDO, Rafael, 36206 Vigo - Pontevedra (ES); BAUVINEAU, Laurent, 92160 Antony (FR); LEMELE, Clément, 92370 Chaville (FR); RICHEUX GUILLOUX, Nathalie, 91430 Igny (FR)
(74) Vertreter: ZF Patentabteilung - DIPS
(86) Internationale Anmeldenummer: PCT/EP2017/080932
(87) Internationale Veröffentlichungsnummer: WO 2018/100039

(56) Entgegenhaltungen:
- DE-A1- 10 206 487
- DE-A1-102015 006 543
- US-A1- 2016 023 667
- US-A1- 2016 023 677

## Beschreibung

Die Erfindung betrifft ein Lenkrad für ein Fahrzeug, eine Bedieneinheit für ein solches Lenkrad sowie eine Lenkradbaugruppe und ein Verfahren zu deren Herstellung.

Fahrzeuglenkräder weisen derzeit im Allgemeinen eine Nabe und einen Lenkradkranz auf, der mit der Nabe verbunden ist. Aus dem Stand der Technik sind zahlreiche Lenkradformen bekannt, welche sich beispielsweise durch die Anzahl der Speichen zwischen Nabe und Lenkradkranz unterscheiden.

Die US 2016/0023667 A1 und US 2016/0023677 A1 zeigen beispielsweise ein Fahrzeuglenkrad mit drei Speichen, wobei an einer der Speichen eine Vibrationsvorrichtung montiert ist.

Lenkräder mit möglichst wenigen Speichen weisen Vorteile hinsichtlich Gewicht und Fertigung auf. Gleichzeitig gibt es Bestrebungen, die Gestaltung des Lenkrades zu optimieren. Bedienfunktionen eines Fahrzeugs sollen weitgehend durch Bedienelemente am Lenkrad zu steuern sein.

In der DE 102 06 487 A1 ist bereits ein Lenkrad für Kraftfahrzeuge offenbart, bei dem ein Lenkradkranz in seinem 6-Uhr-Bereich lediglich über zwei Speichenarme an einer Lenkradnabe befestigt ist. Ferner sind an der Lenkradnabe zwei flügelförmige Erweiterungen zum Anbau von Bedienelementen vorgesehen.

Aufgabe der Erfindung ist es, ein Lenkrad für ein Fahrzeug zu schaffen, das bei verbesserter Gestaltung die gewünschten Bedienfunktionen bereitstellt, sowie eine Bedieneinheit, die sich mit möglichst geringem Aufwand an einem solchen Lenkrad montieren und bei Bedarf austauschen lässt.

Erfindungsgemäß wird diese Aufgabe gelöst durch ein Lenkrad mit einer Lenkradachse, einer Nabe zur Befestigung des Lenkrads an einer um die Lenkradachse drehbaren Lenkwelle, und einem Lenkradkranz, der mit der Nabe verbunden ist und die Nabe in Umfangsrichtung zumindest teilweise umgibt, wobei am Lenkradkranz ein Montagevorsprung zur Befestigung einer Bedieneinheit ausgebildet ist, und wobei der Montagevorsprung ein Kopplungselement zur lösbaren Befestigung der Bedieneinheit sowie einen Positionierabschnitt zur Lagefestlegung der Bedieneinheit aufweist. Das Kopplungselement ist beispielsweise eine Schraube und/oder (vorzugsweise) ein Rastelement. Weiter vorzugsweise ist der Lenkradkranz lediglich in einem (im Einbau- oder Funktionszustand unteren) Bereich (zwischen 4:30h und 7:30h) mit der Nabe verbunden. Vorzugsweise ist der Lenkradkranz in einem (im Einbau- oder Funktionszustand seitlichen und oberen) Bereich (zwischen 7:30h und 4:30h) nicht mit der Nabe verbunden, also frei von Speichen.

Erfindungsgemäß erstreckt sich der Montagevorsprung ausgehend vom Lenkradkranz zu einem freien Ende hin. Bezogen auf eine Tangentialrichtung in seinem Ausgangspunkt am Lenkradkranz erstreckt sich der Montagevorsprung bevorzugt in einem Winkel von wenigstens 30° und maximal 90° zur Tangentialrichtung, insbesondere in radialer Richtung, d.h. in einem Winkel von 90° zur Radialrichtung. Der Montagevorsprung kann sich dabei einwärts oder auswärts, also in Richtung zur Nabe von der Nabe weg erstrecken.

Vorzugsweise spannt der Lenkradkranz eine Ebene auf, wobei sich der Montagevorsprung in dieser Ebene oder parallel zu dieser Ebene erstreckt. Alternativ ist jedoch auch denkbar, dass sich der Montagevorsprung aus dieser Ebene heraus erstreckt, insbesondere senkrecht aus dieser Ebene heraus erstreckt.

Gemäß einer weiteren Ausführungsform des Lenkrads ist das Koppelelement ein Rastelement zur Verrastung der Bedieneinheit am Lenkradkranz, insbesondere ein starrer Rastvorsprung.

Der Positionierabschnitt kann ein Führungsabschnitt sein, der zusammen mit einem Führungsabschnitt der Bedieneinheit eine Montageführung für die Bedieneinheit bildet.

Der Lenkradkranz weist bevorzugt ein Lenkradskelett mit einem einstückig angeformten Skelettvorsprung auf, der zumindest teilweise den Montagevorsprung bildet, wobei das Kopplungselement und/oder der Positionierabschnitt am Skelettvorsprung ausgebildet ist. Das Lenkradskelett ist bevorzugt ein Metallteil, beispielsweise ein Spritzgussteil aus einer Magnesiumlegierung oder Aluminiumlegierung. Damit ist das Lenkradskelett besonders geeignet, über das Kopplungselement Kräfte aufzunehmen, welche auf die Bedieneinheit einwirken. Für die Ausbildung des Positionierabschnitts, wie zum Beispiel einer Montageführung sind die Anforderungen an die Maßgenauigkeit des Lenkradskeletts höher.

Im Übrigen weist der Lenkradkranz neben dem Lenkradskelett bevorzugt eine Skelettabdeckung mit einem einstückig angeformten Abdeckungsvorsprung auf, welcher zumindest teilweise den Montagevorsprung bildet, wobei das Kopplungselement und/oder der Positionierabschnitt am Abdeckungsvorsprung ausgebildet sind. Die Skelettabdeckung ist bevorzugt ein Kunststoffteil, das sich mit minimalem Aufwand sehr maßgenau herstellen lässt und zudem eine gewisse Flexibilität aufweist, abhängig vom Material und der Materialstärke. Damit ist die Skelettabdeckung besonders geeignet, über den Positionierabschnitt beispielsweise eine Montageführung für die Bedieneinheit bereitzustellen. Für die Ausbildung des Kopplungselements zum Herstellen einer robusten Verbindung muss die Skelettabdeckung die erforderliche Stabilität aufweisen.

Besonders bevorzugt sind daher das Kopplungselement am Lenkradskelett und der Positionierabschnitt an der Skelettabdeckung ausgebildet, insbesondere angeformt.

Gemäß einer weiteren Ausführungsform des Lenkrads weist der Lenkradkranz ein Lenkradskelett, eine Skelettabdeckung sowie eine Leitung zur Datenweitergabe und/oder Stromversorgung der Bedieneinheit auf, wobei das Lenkradskelett und die Skelettabdeckung einen Leitungskanal ausbilden, in welchem die Leitung verläuft.

Die Skelettabdeckung kann hierbei einen einstückig angeformten Abdeckungsvorsprung aufweisen, welcher zumindest teilweise den Montagevorsprung bildet, wobei an einem freien Ende des Abdeckungsvorsprungs ein Steckverbinder ausgebildet ist, in dem eine Leitung zur Datenweitergabe und Stromversorgung der Bedieneinheit endet. Dieser Steckverbinder ist bevorzugt komplementär zu einem Steckverbinder der Bedieneinheit ausgebildet.

Schließlich kann ein Lenkradskelett des Lenkrads sowie gegebenenfalls eine optional vorgesehene Skelettabdeckung zumindest teilweise mit einem flexiblen Material, insbesondere einer Umschäumung umgeben ist.

Die Aufgabe wird im Übrigen auch gelöst durch eine Bedieneinheit, insbesondere eine (Multifunktions-)Schalterbaugruppe für ein solches Lenkrad, die ein Kopplungselement sowie einen Positionierabschnitt aufweist und auf den Montagevorsprung des Lenkrads aufsteckbar sowie formschlüssig mit dem Montagevorsprung koppelbar ist. Dabei ist die Bedieneinheit von einem freien Ende des Montagevorsprungs in Richtung zum Lenkradkranz aufsteckbar.

Erfindungsgemäß ist das Kopplungselement der Bedieneinheit als Rastelement, insbesondere als elastische Rastfeder, ausgeführt.

Ferner kann der Positionierabschnitt der Bedieneinheit zwei parallele Führungsschienen umfassen, wobei das Kopplungselement bevorzugt zwischen den beiden Führungsschienen angeordnet ist.

Gemäß einer Ausführungsform ist in der Bedieneinheit eine sacklochartige Aussparung zur Aufnahme des Montagevorsprungs vorgesehen, welche sich von einer Öffnung an der Oberfläche der Bedieneinheit bis zu einem geschlossenen Ende erstreckt, wobei am geschlossenen Ende der Aussparung ein elektrischer Steckverbinder zum Anschließen der Bedieneinheit ans Lenkrad ausgebildet ist.

Im Übrigen betrifft die Erfindung eine Lenkradbaugruppe mit einem oben beschriebenen Lenkrad und einer oben beschriebenen, separaten Bedieneinheit, wobei die Bedieneinheit auf den Montagevorsprung aufgesteckt und formschlüssig am Montagevorsprung befestigt ist.

Gemäß einer Ausführungsform der Lenkradbaugruppe ist bevorzugt, dass die Bedieneinheit und/oder der Montagevorsprung eine Aussparung für ein Werkzeug zum Lösen der Formschlussverbindung zwischen der Bedieneinheit und dem Lenkrad aufweist. Die Aussparung kann dabei konkret als Kerbe, Durchgangsöffnung, Schlitz o.ä. ausgeführt sein.

Schließlich betrifft die Erfindung noch ein Verfahren zur Herstellung einer Lenkradbaugruppe mit folgenden Schritten:
a) Bereitstellen einer oben beschriebenen Bedieneinheit mit einem elektrischen Anschluss zur Signalweitergabe und/oder Stromversorgung von elektrischen Komponenten der Bedieneinheit;
b) Bereitstellen eines Lenkrads, insbesondere eines oben beschriebenen Lenkrads, wobei an einem Lenkradkranz ein Montagevorsprung und im Lenkradkranz eine elektrische Leitung zum elektrischen Anschließen der Bedieneinheit vorgesehen ist;
c) Aufstecken der Bedieneinheit auf den Montagevorsprung des Lenkradkranzes in einer Montagerichtung bis zum Erreichen einer Endmontageposition, in welcher eine Formschlussverbindung zwischen der Bedieneinheit und dem Lenkradkranz besteht, wobei die Bedieneinheit beim Aufstecken auf den Montagevorsprung vor Erreichen der Endmontageposition mit der elektrischen Leitung im Lenkradkranz elektrisch verbunden wird.

Gemäß einer Verfahrensvariante ist in der Lenkradbaugruppe eine Erkennungseinheit zur Anzeige eines korrekten elektrischen Anschlusses vorgesehen, wobei die elektrische Leitung nach dem Aufstecken der Bedieneinheit bestromt wird und die Erkennungseinheit daraufhin im Falle eines korrekten elektrischen Anschlusses der Bedieneinheit ein Signal, insbesondere ein optisches Signal ausgibt. Die Erkennungseinheit ist beispielsweise in der Bedieneinheit oder im Lenkrad verbaut.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine Draufsicht auf ein erfindungsgemäßes Lenkrad;
- Figur 2 eine Rückansicht des Lenkrads aus Figur 1;
- Figur 3 eine separate Ansicht einer Skelettabdeckung des Lenkrads gemäß den Figuren 1 und 2;
- Figur 4 die Rückansicht des Lenkrads gemäß Figur 2 mit einer aufgebrachten Umschäumung;
- Figur 5 eine Ansicht eines Teils einer erfindungsgemäßen Bedieneinheit für ein erfindungsgemäßes Lenkrad;
- Figur 6 eine Teilansicht einer erfindungsgemäßen Lenkradbaugruppe im Bereich einer Bedieneinheit vor deren Befestigung am Lenkrad;
- Figur 7 die Teilansicht der Lenkradbaugruppe gemäß Figur 6 nach einer Befestigung der Bedieneinheit am Lenkrad;
- Figur 8 eine Montagevorgang einer vorgefertigten, erfindungsgemäßen Bedieneinheit an einem erfindungsgemäßen Lenkrad; und
- Figur 9 eine schematische Perspektivansicht einer erfindungsgemäßen Bedieneinheit.

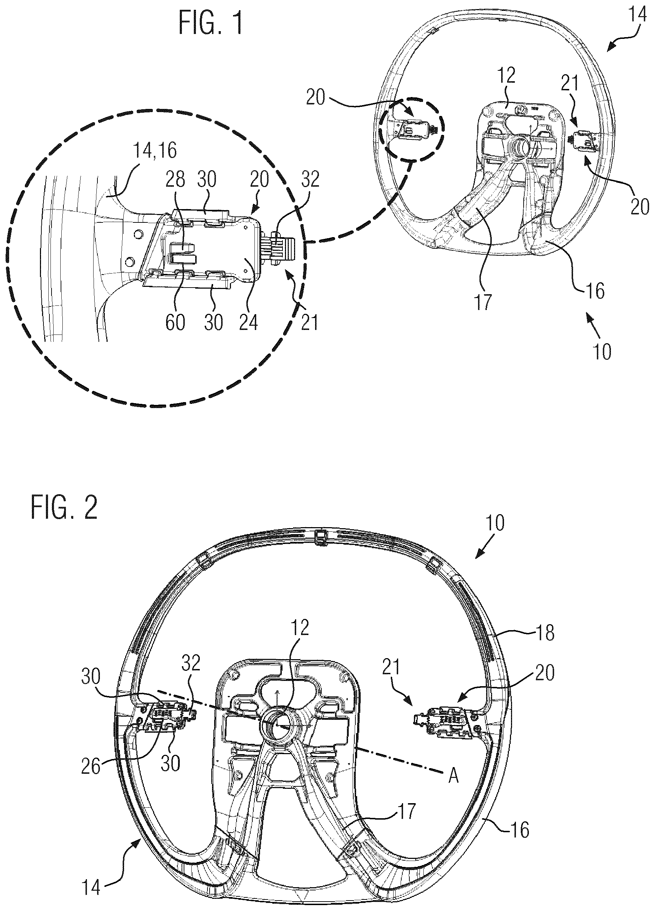

Die Figuren 1 und 2 zeigen Ansichten eines Lenkrads 10 für ein Kraftfahrzeug, mit einer Lenkradachse A, einer Nabe 12 zur Befestigung des Lenkrads 10 an einer um die Lenkradachse A drehbaren Lenkwelle sowie einem Lenkradkranz 14, der mit der Nabe 12 verbunden ist und die Nabe 12 in Umfangsrichtung zumindest teilweise umgibt.

Ferner ist ein Lenkradskelett 16 als tragende Komponente des Lenkrads 10 vorgesehen, wobei die Nabe 12, der Lenkradkranz 14 sowie eine oder mehrere Speichen 17 des Lenkrads 10 Abschnitte des Lenkradskeletts 16 umfassen. Das Lenkradskelett 16 ist gemäß Figur 1 ein einstückiges Metallteil, beispielsweise ein Spritzgussteil aus einer Magnesiumlegierung oder Aluminiumlegierung, kann aber alternativ auch aus mehreren Skelettkomponenten zusammengesetzt sein.

Anhand der Figur 2 wird deutlich, dass das Lenkrad 10, insbesondere der Lenkradkranz 14, auf einer Rückseite des Lenkradskeletts 16 eine Skelettabdeckung 18 aufweist, die am Lenkradskelett 16 befestigt ist. Als Rückseite wird in diesem Zusammenhang diejenige Seite bezeichnet, welche im eingebauten Zustand des Lenkrads 10 einer Armaturentafel des Fahrzeugs zugewandt ist. Die Skelettabdeckung 18 ist insbesondere ein Kunststoffteil, das beispielsweise mit dem Lenkradskelett 16 einen Kanal zu Führung elektrischer Leitungen ausbildet.

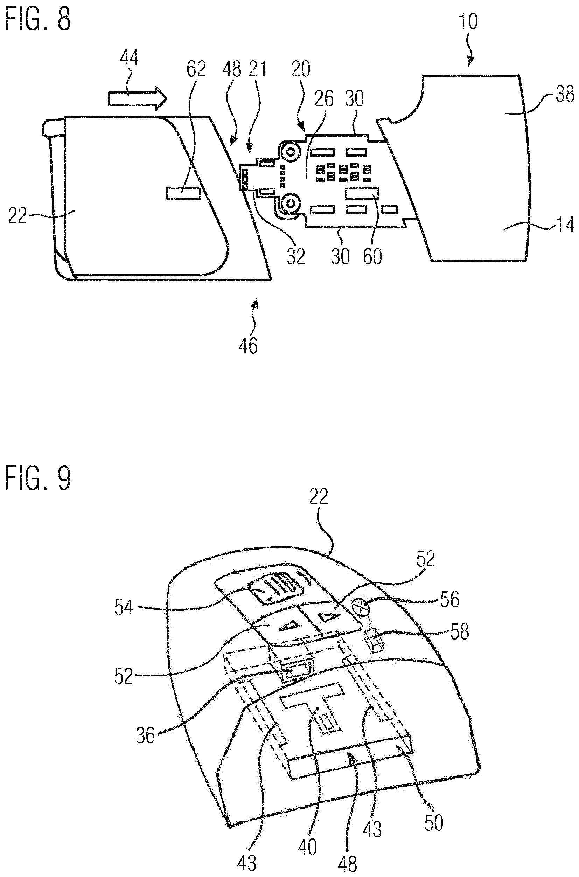

Am Lenkradkranz 14 sind Montagevorsprünge 20 zur Befestigung einer Bedieneinheit 22 (siehe zum Beispiel Figuren 8 und 9) ausgebildet, wobei sich die Montagevorsprünge 16 jeweils ausgehend vom Lenkradkranz 14 zu einem freien Ende 21 hin erstrecken.

Insbesondere erstrecken sich die Montagevorsprünge 16 in einer Ebene oder parallel zu einer Ebene, die vom Lenkradkranz 14 aufgespannt wird und im Wesentlichen senkrecht zur Lenkradachse A verläuft.

Im vorliegenden Ausführungsbeispiel ragen die Montagevorsprünge 16 ausgehend vom Lenkradkranz 14 nach innen, das heißt in Richtung zur Nabe 12, insbesondere im Wesentlichen radial nach innen.

Selbstverständlich sind auch Ausführungsvarianten denkbar, bei denen die Montagevorsprünge 16 nach außen, das heißt von der Nabe 12 weg ragen oder sich schräg zu der vom Lenkradkranz aufgespannten Ebene erstrecken.

Gemäß den Figuren 1 und 2 wird der Montagevorsprung 20 durch einen einstückig am Lenkradskelett 16 angeformten Skelettvorsprung 24 sowie einen einstückig an der Skelettabdeckung 18 angeformten Abdeckungsvorsprung 26 gebildet.

Insbesondere anhand des Detailausschnitts zu Figur 1 wird deutlich, dass der Montagevorsprung 20 ein Kopplungselement 28 zur lösbaren Befestigung der Bedieneinheit 22 sowie einen Positionierabschnitt 30 zur Lagefestlegung der Bedieneinheit 22 aufweist. Das Kopplungselement 28 ist im vorliegenden Fall ein Rastelement zur Verrastung der Bedieneinheit 22 am Lenkradkranz 14, wobei alternativ auch denkbar wäre, dass das Kopplungselement 28 ein Schraubgewinde oder eine Schraube zur Befestigung der Bedieneinheit 22 am Lenkradkranz 14 ist. Das Kopplungselement 28 sorgt in jedem Fall für eine sichere sowie robuste Verbindung und verhindert ein ungewolltes Lösen der Bedieneinheit 22 vom Lenkradkranz 14. Der Positionierabschnitt 30 dient hingegen einer exakten Ausrichtung der Bedieneinheit 22 und trägt hauptsächlich quer zu einer Montage- bzw. Demontagerichtung zu einer weitgehend spielfreien Lagerung der Bedieneinheit 22 bei. Dementsprechend ist der Positionierabschnitt 30 insbesondere ein Führungsabschnitt, der zusammen mit einem Führungsabschnitt der Bedieneinheit 22 eine Montageführung bildet.

Im dargestellten Ausführungsbeispiel ist das Kopplungselement 28 als starre Rastnase am Skelettvorsprung 24 des Lenkradskeletts 16 angeformt, wohingegen der Positionierabschnitt 30 in Form zweier paralleler Führungsschienen am Abdeckungsvorsprung 26 der Skelettabdeckung 18 angeformt ist.

Abgesehen vom Kopplungselement 28 und dem Positionierabschnitt 30 weist der Montagevorsprung 20 an seinem freien Ende 21 einen Steckverbinder 32 auf, in welchem eine elektrische Leitung 34 zur Datenweitergabe und/oder Stromversorgung der Bedieneinheit 22 endet. Dieser Steckverbinder 32 ist dementsprechend komplementär zu einem Steckverbinder 36 der Bedieneinheit 22 ausgeführt.

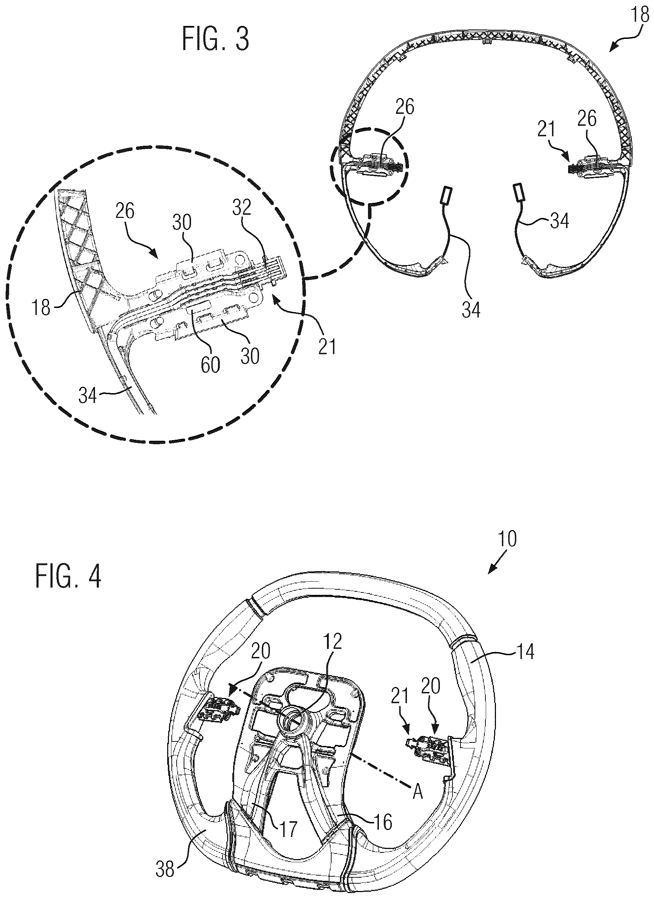

Die Figur 3 zeigt eine Draufsicht auf eine dem Lenkradskelett 16 zugewandte Seite der Skelettabdeckung 18. Dabei wird deutlich, dass das Lenkrad 10 die elektrische Leitung 34 zur Datenweitergabe und/oder Stromversorgung der Bedieneinheit 22 aufweist, wobei die Skelettabdeckung 18 in ihrem am Lenkradskelett 16 montierten Zustand zusammen mit dem Lenkradskelett 16 einen geschützten Leitungskanal ausbildet, in welchem die Leitung 34 verläuft.

Der Steckverbinder 32 ist hier konkret an einem freien Ende des Abdeckungsvorsprungs 26 angeformt, in welchem die elektrische Leitung 34 zur Datenweitergabe und/oder Stromversorgung der Bedieneinheit 22 endet.

Analog zu Figur 2 zeigt die Figur 4 eine Rückansicht des Lenkrads 10, wobei das Lenkradskelett 16 und die Skelettabdeckung 18 teilweise von einem flexiblen Material umgeben, vorzugsweise umschäumt sind. Der Lenkradkranz 14 weist folglich eine Umschäumung 38 auf. Ferner kann der Lenkradkranz 14 optional noch eine integrierte Lenkradheizung sowie eine Holz- oder Lederverkleidung aufweisen.

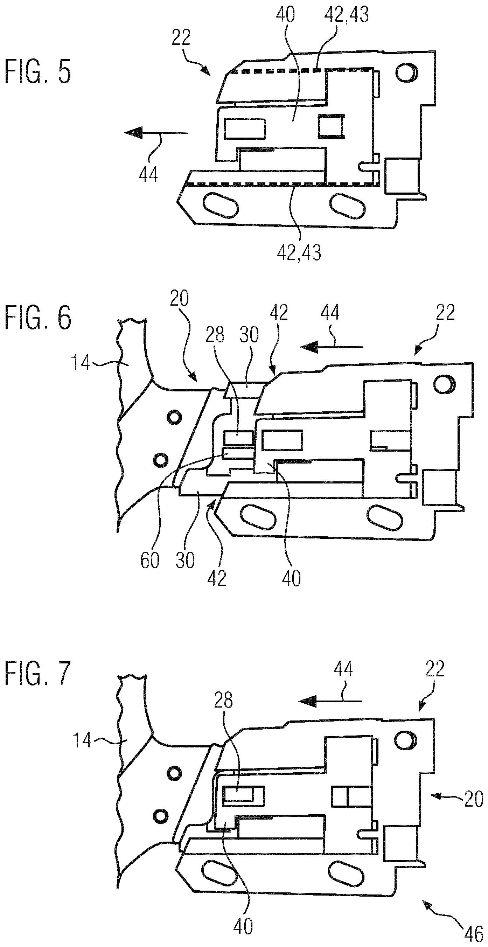

Die Figuren 5 bis 7 zeigen zur Veranschaulichung der Montage am Lenkradkranz 14 eine aufgeschnittene oder auseinandergebaute Bedieneinheit 22, die ein Kopplungselement 40 sowie einen Positionierabschnitt 42 umfasst und auf den Montagevorsprung 20 des Lenkrads 10 aufsteckbar sowie formschlüssig mit dem Montagevorsprung 20 koppelbar ist.

Das Kopplungselement 40 ist gemäß Figur 5 als elastische Rastfeder ausgeführt, konkret als Blattfeder aus Federstahl.

Der Positionierabschnitt 42 umfasst zwei parallele Führungsschienen 43 (in Figur 5 fett gestrichelt hervorgehoben), wobei das Kopplungselement 40 zwischen den Führungsschienen 43 angeordnet ist (siehe auch Figur 9).

Die Figur 6 zeigt das Aufschieben der Bedieneinheit 22 in einer Montagerichtung 44 vom freien Ende 21 des Montagevorsprungs 20 in Richtung zum Lenkradkranz 14, wobei die Führungsschienen 43 der Bedieneinheit 22 an dem als Führungsabschnitt ausgebildeten Positionierabschnitt 30 des Montagevorsprungs 30 gleiten und für eine exakte Ausrichtung der Bedieneinheit 22 relativ zum Lenkradkranz 14 sorgen.

Die Rastfeder befindet sich gemäß Figur 6 in Montagerichtung 44 gesehen unmittelbar vor dem als starre Rastnase ausgebildeten Kopplungselement 28 des Montagevorsprungs 20, sodass die Bedieneinheit 22 in der Montagerichtung 44 sowie in einer entgegengesetzten Demontagerichtung noch nicht am Lenkradkranz 14 fixiert ist.

Die Figur 7 zeigt die Bedieneinheit 22 in ihrer Endmontageposition, in welcher durch die zusammenwirkenden Kopplungselemente 28, 40 eine Rastverbindung zwischen der Bedieneinheit 22 und dem Lenkradkranz 14 besteht. Konkret wird die Rastfeder beim Aufschieben der Bedieneinheit 22 durch den schrägen Rücken der starren Rastnase elastisch verformt und schnappt dann hinter der Rastnase zurück, sodass die Bedieneinheit 22 fest mit dem Lenkradkranz 14 verbunden ist.

Die Endmontageposition der Bedieneinheit 22 kann insbesondere durch einen Anschlag am Skelettvorsprung 24, am Abdeckungsvorsprung 26 oder an der Umschäumung 38 definiert sein.

Nach der oben beschriebenen Montage der der Bedieneinheit 22 ergibt sich eine Lenkradbaugruppe 46 mit dem Lenkrad 10 und der Bedieneinheit 22, wobei die Bedieneinheit 22 auf den Montagevorsprung 20 des Lenkrads 10 aufgesteckt und formschlüssig am Montagevorsprung 20 befestigt ist.

Das Verfahren zur Herstellung dieser Lenkradbaugruppe 46 zeichnet sich insbesondere dadurch aus, dass die Bedieneinheit 22 beim Aufstecken auf den Montagevorsprung 20 vor Erreichen der Endmontageposition über die Steckverbinder 32, 36 automatisch mit der elektrischen Leitung 34 im Lenkradkranz 14 elektrisch verbunden wird (siehe Figur 8).

Gemäß Figur 9 weist die Bedieneinheit 22 hierzu eine sacklochartige Aussparung 48 zur Aufnahme des Montagevorsprungs 20 auf, die sich von einer Öffnung 50 an der Oberfläche der Bedieneinheit 22 bis zu einem geschlossenen Ende erstreckt, wobei an diesem geschlossenen Ende der Bedieneinheit 22 der komplementär zum Steckverbinder 32 des Montagevorsprungs 20 ausgeführte, elektrische Steckverbinder 36 zum Anschließen der Bedieneinheit 22 ans Lenkrad 10 vorgesehen ist.

Die Bedieneinheit 22 ist gemäß Figur 9 eine Multifunktions-Schalterbaugruppe, die beispielhaft zwei Druckschalter 52 und ein Rändelrad 54 aufweist, wobei selbstverständlich auch andere Schaltelemente wie Drehschalter, Tastfelder oder berührungsempfindliche Bildschirme vorgesehen sein können. Zudem umfasst die Bedieneinheit 22 im vorliegenden Fall noch ein Anzeigeelement 56, insbesondere ein Leuchtmittel.

Optional umfasst das Verfahren zum Herstellen der Lenkradbaugruppe 46 noch einen Schritt zur Anschlusskontrolle der Bedieneinheit 22. Dafür ist in der Lenkradbaugruppe 46 beispielsweise eine Erkennungseinheit 58 zur Anzeige eines korrekten elektrischen Anschlusses der Bedieneinheit 22 vorgesehen, wobei die elektrische Leitung 34 nach dem Aufstecken der Bedieneinheit 22 bestromt wird und die Erkennungseinheit 58 im Falle eines korrekten elektrischen Anschlusses der Bedieneinheit 22 ein vorbestimmtes Signal ausgibt.

Gemäß Figur 9 ist die Erkennungseinheit 58 in die Bedieneinheit 22 integriert und umfasst das Anzeigeelement 56. Alternativ kann die Erkennungseinheit 58 jedoch auch am oder im Lenkrad 10 angeordnet sein.

Sobald die Erkennungseinheit 58 nach einer Bestromung der elektrischen Leitung 34 einen korrekten elektrischen Anschluss der Bedieneinheit 22 feststellt (zum Beispiel über eine Widerstandsmessung), wird das vorbestimmte Signal am Anzeigeelement 56 ausgelöst. Auf diese Weise lässt sich nach einer Montage der Bedieneinheit 22 am Lenkrad 10 schnell und einfach eine elektrische Anschluss-überprüfung durchführen.

Für eine Demontage der Bedieneinheit 22 weist die Bedieneinheit 22 und/oder der Montagevorsprung 20 eine Aussparung für ein Werkzeug zum Lösen der Formschlussverbindung zwischen der Bedieneinheit 22 und dem Lenkrad 10 auf.

Die Aussparung ist gemäß dem Detailausschnitt der Figur 1 insbesondere als Durchgangsöffnung 60 im Montagevorsprung 20 sowie gemäß Figur 8 als Durchgangsöffnung 62 in der Bedieneinheit 22, insbesondere einem Gehäuse der Bedieneinheit 22 ausgeführt. Anhand der Figuren 6 und 7 wird deutlich, dass ein Abschnitt des als Rastfeder ausgebildeten Kopplungselements 40 in der Endmontageposition der Bedieneinheit 22 an die Durchgangsöffnung 60 angrenzt. Folglich lässt sich die Rastverbindung zwischen den Kopplungselementen 28, 40 durch Verformung der Rastfeder mit einem geeigneten Werkzeug lösen und damit die Bedieneinheit 22 vom Montagevorsprung 20 abziehen.

## Patentansprüche

1. Lenkrad für ein Fahrzeug, mit
einer Lenkradachse (A),
einer Nabe (12) zur Befestigung des Lenkrads (10) an einer um die Lenkradachse (A) drehbaren Lenkwelle, und
einem Lenkradkranz (14), der mit der Nabe (12) verbunden ist und die Nabe (12) in Umfangsrichtung zumindest teilweise umgibt,
wobei am Lenkradkranz (14) ein Montagevorsprung (20) zur Befestigung einer Bedieneinheit (22) ausgebildet ist,
**dadurch gekennzeichnet, dass** der Montagevorsprung (20) ein Kopplungselement (28) zur lösbaren Befestigung der Bedieneinheit (22) sowie einen Positionierabschnitt (30) zur Lagefestlegung der Bedieneinheit (22) aufweist,
wobei sich der Montagevorsprung (20) vom Lenkradkranz (14) zu einem freien Ende (21) hin erstreckt.

2. Lenkrad nach Anspruch 1, **dadurch gekennzeichnet, dass** der Lenkradkranz (14) eine Ebene aufspannt, wobei sich der Montagevorsprung (20) in dieser Ebene oder parallel zu dieser Ebene erstreckt.

3. Lenkrad nach wenigstens einem der vorhergehenden Ansprüche, **dadurch gekennzeichnet, dass** das Kopplungselement (28) ein Rastelement zur Verrastung der Bedieneinheit (22) am Lenkradkranz (14) ist.

4. Lenkrad nach wenigstens einem der vorhergehenden Ansprüche, **dadurch gekennzeichnet, dass** der Positionierabschnitt (30) ein Führungsabschnitt ist, der zusammen mit einem Führungsabschnitt der Bedieneinheit (22) eine Montageführung für die Bedieneinheit (22) bildet.

5. Lenkrad nach wenigstens einem der vorhergehenden Ansprüche, **dadurch gekennzeichnet, dass** der Lenkradkranz (14) ein Lenkradskelett (16) mit einem einstückig angeformten Skelettvorsprung (24) aufweist, der zumindest teilweise den Montagevorsprung (20) bildet, wobei das Kopplungselement (28) und/oder der Positionierabschnitt (30) am Skelettvorsprung (24) ausgebildet ist.

6. Lenkrad nach wenigstens einem der vorhergehenden Ansprüche, **dadurch gekennzeichnet, dass** der Lenkradkranz (14) ein Lenkradskelett (16) sowie eine Skelettabdeckung (18) mit einem einstückig angeformten Abdeckungsvorsprung (26) aufweist, welcher zumindest teilweise den Montagevorsprung (20) bildet, wobei das Kopplungselement (28) und/oder der Positionierabschnitt (30) am Abdeckungsvorsprung (26) ausgebildet ist.

7. Lenkrad nach wenigstens einem der vorhergehenden Ansprüche, **dadurch gekennzeichnet, dass** der Lenkradkranz (14) ein Lenkradskelett (16), eine Skelettabdeckung (18) sowie eine Leitung (34) zur Datenweitergabe und/oder Stromversorgung der Bedieneinheit (22) aufweist, wobei das Lenkradskelett (16) und die Skelettabdeckung (18) einen Leitungskanal ausbilden, in welchem die Leitung (34) verläuft.

8. Lenkrad nach wenigstens einem der vorhergehenden Ansprüche, **dadurch gekennzeichnet, dass** eine Skelettabdeckung (18) einen einstückig angeformten Abdeckungsvorsprung (26) aufweist, welcher zumindest teilweise den Montagevorsprung (20) bildet, wobei an einem freien Ende des Abdeckungsvorsprungs (26) ein Steckverbinder (32) ausgebildet ist, in welchem eine Leitung (34) zur Datenweitergabe und/oder Stromversorgung der Bedieneinheit (22) endet.

9. Lenkrad nach wenigstens einem der vorhergehenden Ansprüche, **dadurch gekennzeichnet, dass** ein Lenkradskelett (16) zumindest teilweise mit einem flexiblen Material, insbesondere einer Umschäumung (38) umgeben ist.

10. Bedieneinheit für ein Lenkrad (10) nach einem der vorhergehenden Ansprüche, **dadurch gekennzeichnet, dass** die Bedieneinheit (22) ein Kopplungselement (40) sowie einen Positionierabschnitt (42) aufweist und vom freien Ende (21) des Montagevorsprungs (20) in Richtung zum Lenkradkranz (14) auf den Montagevorsprung (20) des Lenkrads (10) aufsteckbar sowie formschlüssig mit dem Montagevorsprung (20) koppelbar ist, wobei das Kopplungselement (40) als Rastelement ausgeführt ist.

11. Bedieneinheit nach Anspruch 10, **dadurch gekennzeichnet, dass** das Kopplungselement (40) als elastische Rastfeder ausgeführt ist.

12. Bedieneinheit nach Anspruch 10 oder 11, **dadurch gekennzeichnet, dass** der Positionierabschnitt (42) zwei parallele Führungsschienen (43) umfasst, insbesondere wobei das Kopplungselement (40) zwischen den Führungsschienen (43) angeordnet ist.

13. Bedieneinheit nach wenigstens einem der Ansprüche 10 bis 12, **dadurch gekennzeichnet, dass** eine sacklochartige Aussparung (48) zur Aufnahme des Montagevorsprungs (20) vorgesehen ist, welche sich von einer Öffnung (50) an der Oberfläche der Bedieneinheit (22) bis zu einem geschlossenen Ende erstreckt, wobei am geschlossenen Ende der sacklochartigen Aussparung (48) ein elektrischer Steckverbinder (36) ausgebildet ist.

14. Lenkradbaugruppe mit einem Lenkrad (10) nach wenigstens einem der Ansprüche 1 bis 9 und einer separaten Bedieneinheit (22) nach wenigstens einem der Ansprüche 10 bis 13, **dadurch gekennzeichnet, dass** die Bedieneinheit (22) auf den Montagevorsprung (20) aufgesteckt und formschlüssig am Montagevorsprung (20) befestigt ist.

15. Lenkradbaugruppe nach Anspruch 14, **dadurch gekennzeichnet, dass** die Bedieneinheit (22) und/oder der Montagevorsprung (20) eine Aussparung (60) für ein Werkzeug zum Lösen der Formschlussverbindung zwischen der Bedieneinheit (22) und dem Lenkrad (10) aufweist.

16. Verfahren zur Herstellung einer Lenkradbaugruppe (46) mit folgenden Schritten:
a) Bereitstellen einer Bedieneinheit (22) nach wenigstens einem der Ansprüche 10 bis 13 mit einem elektrischen Anschluss zur Signalweitergabe und/oder Stromversorgung von elektrischen Komponenten der Bedieneinheit (22);
b) Bereitstellen eines Lenkrads (10), insbesondere nach wenigstens einem der Ansprüche 1 bis 9, wobei an einem Lenkradkranz (14) ein Montagevorsprung (20) und im Lenkradkranz (14) eine elektrische Leitung (34) zum elektrischen Anschließen der Bedieneinheit (22) vorgesehen ist;
c) Aufstecken der Bedieneinheit (22) auf den Montagevorsprung (20) des Lenkradkranzes (14) in einer Montagerichtung (44) bis zum Erreichen einer Endmontageposition, in welcher eine Formschlussverbindung zwischen der Bedieneinheit (22) und dem Lenkradkranz (14) besteht, wobei die Bedieneinheit (22) beim Aufstecken auf den Montagevorsprung (20) vor Erreichen der Endmontageposition mit der elektrischen Leitung (34) im Lenkradkranz (14) elektrisch verbunden wird.

17. Verfahren nach Anspruch 16, **dadurch gekennzeichnet, dass** in der Lenkradbaugruppe (46) eine Erkennungseinheit (58) zur Anzeige eines korrekten elektrischen Anschlusses der Bedieneinheit (22) vorgesehen ist, wobei die elektrische Leitung (34) nach dem Aufstecken der Bedieneinheit (22) bestromt wird und die Erkennungseinheit (58) im Falle eines korrekten elektrischen Anschlusses der Bedieneinheit (22) ein Signal ausgibt.

## Claims

1. A steering wheel for a vehicle comprising
a steering wheel axis (A),
a hub (12) for fastening the steering wheel (10) on a steering shaft rotatable about the steering wheel axis (A), and
a steering wheel rim (14) being connected to the hub (12) and surrounding the hub (12) at least partially in the circumferential direction,
wherein a mounting projection (20) for fastening an operating unit (22) is configured on the steering wheel rim (14),
**characterized in that** the mounting projection (20) includes a coupling element (28) for detachably fastening the operating unit (22) as well as a positioning portion (30) for fixing the operating unit (22) in position,
wherein the mounting projection (20) extends from the steering wheel rim (14) toward a free end (21).

2. The steering wheel according to claim 1, **characterized in that** the steering wheel rim (14) spans a plane, wherein the mounting projection (20) extends in said plane or in parallel to said plane.

3. The steering wheel according to at least one of the preceding claims, **characterized in that** the coupling element (28) is a detent element for locking the operating unit (22) at the steering wheel rim (14).

4. The steering wheel according to at least one of the preceding claims, **characterized in that** the positioning portion (30) is a guiding portion, which together with a guiding portion of the operating unit (22), forms a mounting guide for the operating unit (22).

5. The steering wheel according to at least one of the preceding claims, **characterized in that** the steering wheel rim (14) includes a steering wheel armature (16) having an integrally formed armature projection (24) which at least partially forms the mounting projection (20), wherein the coupling element (28) and/or the positioning portion (30) are/is formed at the armature projection (24).

6. The steering wheel according to at least one of the preceding claims, **characterized in that** the steering wheel rim (14) includes a steering wheel armature (16) as well as an armature cover (18) having an integrally formed cover projection (26) which at least partially forms the mounting projection (20), wherein the coupling element (28) and/or the positioning portion (30) are/is formed at the cover projection (26).

7. The steering wheel according to at least one of the preceding claims, **characterized in that** the steering wheel rim (14) includes a steering wheel armature (16), an armature cover (18) as well as a line (34) for data transmission and/or power supply of the operating unit (22), wherein the steering wheel armature (16) and the armature cover (18) constitute a line channel in which the line (34) extends.

8. The steering wheel according to at least one of the preceding claims, **characterized in that** an armature cover (18) includes an integrally formed cover projection (26) which at least partially forms the mounting projection (20), at the free end of the cover projection (26) a plug connector (32) being configured in which a line (34) for data transmission and/or power supply of the operating unit (22) ends.

9. The steering wheel according to at least one of the preceding claims, **characterized in that** a steering wheel armature (16) is surrounded at least partially by a flexible material, especially a foam coating (38).

10. An operating unit for a steering wheel (10) according to any one of the preceding claims, **characterized in that** the operating unit (22) includes a coupling element (40) as well as a positioning portion (42) and from the free end (21) of the mounting projection (20) in the direction to the steering wheel rim (14) is adapted to be attached to the mounting projection (20) of the steering wheel (10) as well as to be positively coupled to the mounting projection (20), the coupling element (40) being configured as a detent element.

11. The operating unit according to claim 10, **characterized in that** the coupling element (40) is configured as an elastic detent spring.

12. The operating unit according to claim 10 or 11, **characterized in that** the positioning portion (42) includes two parallel guide rails (43), especially with the coupling element (40) being sandwiched between said guide rails (43).

13. The operating unit according to at least one of the claims 10 to 12, **characterized in that** a blind-hole type recess (48) for receiving the mounting projection (20) is provided which extends from an opening (50) on the surface of the operating unit (22) to a closed end, with an electric plug connector (36) being formed at the closed end of the blind-hole type recess (48).

14. A steering wheel assembly comprising a steering wheel (10) according to at least one of the claims 1 to 9 and a separate operating unit (22) according to at least one of the claims 10 to 13, **characterized in that** the operating unit (22) is attached to the mounting projection (20) and is positively fastened to the mounting projection (20).

15. The steering wheel assembly according to claim 14, **characterized in that** the operating unit (22) and/or the mounting projection (20) include(s) a recess (60) for a tool for releasing the positive connection between the operating unit (22) and the steering wheel (10).

16. A method of manufacturing a steering wheel assembly (46) comprising the following steps of:
a) providing an operating unit (22) according to at least one of the claims 10 to 13 comprising an electrical connection for signal transmission and/or power supply of electric components of the operating unit (22);
b) providing a steering wheel (10), especially according to at least one of the claims 1 to 9, wherein on a steering wheel rim (14) a mounting projection (20) is provided and within the steering wheel rim (14) an electric line (34) for electrically connecting the operating unit (22) is provided;
c) attaching the operating unit (22) to the mounting projection (20) of the steering wheel rim (14) in a mounting direction (44) up to reaching a final mounting position in which a positive connection exists between the operating unit (22) and the steering wheel rim (14), wherein, when the operating unit (22) is attached to the mounting projection (20), it is electrically connected to the electric line (34) within the steering wheel rim (14) before the final mounting position is reached.

17. The method according to claim 16, **characterized in that** in the steering wheel assembly (46) an identifying unit (58) for displaying a correct electrical connection of the operating unit (22) is provided, wherein electric current is supplied to the electric line (34) after attaching the operating unit (22) and, in the case of correct electrical connection of the operating unit (22), the identifying unit (58) outputs a signal.

## Revendications

1. Volant de direction pour un véhicule, comportant
un axe de volant de direction (A),
un moyeu (12) pour fixer le volant (10) à un axe de direction pouvant tourner autour de l'axe du volant (A), et
une jante de volant (14) qui est reliée au moyeu (12) et entoure au moins partiellement le moyeu (12) dans la direction circonférentielle,
pour lequel une protrusion de montage (20) pour la fixation d'une unité de commande (22) est formée sur la jante du volant (14)
**caractérisé en ce que** la protrusion de montage (20) présente un élément de couplage (28) pour fixer de manière amovible l'unité de commande (22) et une zone de positionnement (30) pour fixer l'emplacement de l'unité de commande (22),
pour lequel la protrusion de montage (20) s'étend depuis la jante du volant (14) vers une extrémité libre (21).

2. Volant selon la revendication 1, **caractérisé en ce que** la jante du volant (14) s'étend sur un plan, pour lequel la protrusion de montage (20) s'étend dans ce plan ou parallèlement à ce plan.

3. Volant de direction selon l'une au moins des revendications précédentes, **caractérisé en ce que** l'élément d'accouplement (28) est un élément d'encliquetage pour encliqueter l'unité de commande (22) sur la jante du volant (14).

4. Volant de direction selon au moins l'une des revendications précédentes, **caractérisé en ce que** la zone de positionnement (30) est une zone de guidage qui, conjointement avec une zone de guidage de l'unité de commande (22), forme un guide de montage pour l'unité de commande (22).

5. Volant de direction selon au moins une des revendications précédentes, **caractérisé en ce que** la jante de volant (14) comprend une armature de volant (16) avec une protrusion d'armature (24) formée d'un seul tenant, laquelle forme au moins partiellement la protrusion de montage (20), pour lequel l'élément d'accouplement (28) et/ou la zone de positionnement (30) sont formés sur la protrusion de l'armature (24).

6. Volant de direction selon au moins une des revendications précédentes, **caractérisé en ce que** la jante de volant (14) comprend une armature de volant (16) ainsi qu'une couverture d'armature (18) aves une protrusion de couverture (26) formée d'un seul tenant, laquelle forme au moins partiellement la protrusion de montage (20), pour lequel l'élément d'accouplement (28) et/ou la zone de positionnement (30) sont formés sur la protrusion de la couverture (26).

7. Volant selon au moins l'une des revendications précédentes, **caractérisé en ce que** la jante de volant (14) présente une armature de volant (16), une couverture d'armature (18) ainsi qu'un câble (34) pour la transmission de données et/ou l'alimentation en énergie de l'unité de commande (22), pour lequel l'armature de volant (16) et la couverture d'armature (18) forment un canal de ligne dans lequel passe le câble (34).

8. Volant de direction selon au moins une des revendications précédentes, **caractérisé en ce qu'**une couverture d'armature (18) présente une protrusion de couverture (26) formée d'un seul tenant, qui forme au moins partiellement la protrusion de montage (20), pour lequel un connecteur (32) est formé à une extrémité libre de la protrusion de couverture (26), connecteur dans lequel termine un câble (34) pour la transmission de données et/ou l'alimentation en énergie de l'unité de commande (22).

9. Volant selon au moins l'une des revendications précédentes, **caractérisé en ce qu'**une armature de volant (16) est au moins partiellement entourée d'un matériau souple, notamment d'un revêtement en mousse (38).

10. Unité de commande pour un volant de direction (10) selon l'une des revendications précédentes, **caractérisée en ce que** l'unité de commande (22) présente un élément d'accouplement (40) ainsi qu'une zone de positionnement (42) et qui peut être enfichée sur la protrusion de montage (20) du volant de direction (10) à partir de l'extrémité libre (21) de la protrusion de montage (20) en direction de la jante du volant (14) et peut être accouplée par complémentarité de forme à la protrusion de montage (20), pour lequel l'élément d'accouplement (40) est conçu comme un élément d'encliquetage.

11. Unité de commande selon la revendication 10, **caractérisée en ce que** l'élément d'accouplement (40) est conçu comme un ressort d'encliquetage élastique.

12. Unité de commande selon la revendication 10 ou 11, **caractérisée en ce que** la zone de positionnement (42) comprend deux rails de guidage parallèles (43), en particulier pour lequel l'élément de couplage (40) est disposé entre les rails de guidage (43).

13. Unité de commande selon au moins l'une des revendications 10 à 12, **caractérisé en ce qu'**il est prévu un évidement (48) en forme de trou borgne pour recevoir la protrusion de montage (20), lequel évidement s'étend depuis une ouverture (50) à la surface de l'ensemble volant de direction (22) jusqu'à une extrémité fermée, pour lequel un connecteur électrique (36) est formé à l'extrémité fermée de l'évidement (48) en forme de trou borgne.

14. Ensemble volant de direction avec un volant de direction (10) selon au moins une des revendications 1 à 9 et une unité de commande séparée (22) selon au moins une des revendications 10 à 13, **caractérisé en ce que** l'unité de commande (22) est enfichée sur la protrusion de montage (20) et est fixée par complémentarité de forme à la protrusion de montage (20).

15. Ensemble de volant de direction selon la revendication 14, **caractérisé en ce que** l'unité de commande (22) et/ou la protrusion de montage (20) présente un évidement (60) pour un outil permettant de libérer la liaison de forme entre l'unité de commande (22) et le volant de direction (10).

16. Procédé de fabrication d'un ensemble de volant de direction (46) comprenant les étapes consistant à :
a) Fournir une unité de commande (22) selon au moins l'une des revendications 10 à 13 avec une connexion électrique pour la transmission de signaux et/ou l'alimentation en énergie de composants électriques de l'unité de commande (22) ;
b) Fournir un volant de direction (10), en particulier selon au moins une des revendications 1 à 9, pour lequel une protrusion de montage (20) est prévue sur une jante de volant (14) et un câble électrique (34) est prévu dans la jante de volant (14) pour le raccordement électrique de l'unité de commande (22) ;
c) Enficher l'unité de commande (22) sur la protrusion de montage (20) de la jante de volant (14) dans une direction de montage (44) jusqu'à atteindre une position finale de montage dans laquelle il existe une liaison de forme entre l'unité de commande (22) et la jante de volant (14), pour lequel l'unité de commande (22) est reliée électriquement au câble électrique (34) dans la jante de volant (14) lorsqu'elle est enfichée sur la protrusion de montage (20) avant d'atteindre la position finale de montage.

17. Procédé selon la revendication 16, **caractérisé en ce qu'**une unité de détection (58) est prévue dans l'ensemble volant de direction (46) pour indiquer un raccordement électrique correct de l'unité de commande (22), pour lequel le câble électrique (34) est mis sous tension après l'enfichage de l'unité de commande (22) et l'unité de détection (58) émet un signal en cas de raccordement électrique correct de l'unité de commande (22).
